Europäisches Patentamt

European Patent Office

Office européen des brevets

(19)

(11) **EP 0 862 255 A1**

(12) **EUROPÄISCHE PATENTANMELDUNG**

(43) Veröffentlichungstag:
    02.09.1998 Patentblatt 1998/36

(51) Int Cl.⁶: **H02H 9/04**, H02H 3/04

(21) Anmeldenummer: 98890032.0

(22) Anmeldetag: 11.02.1998

(84) Benannte Vertragsstaaten:
    AT BE CH DE DK ES FI FR GB GR IE IT LI LU MC
    NL PT SE
    Benannte Erstreckungsstaaten:
    AL LT LV MK RO SI

(30) Priorität: 12.02.1997 AT 225/97

(71) Anmelder: FELTEN & GUILLEAUME AUSTRIA AG
    3943 Schrems-Eugenia 1 (AT)

(72) Erfinder: Suchentrunk, Karl Ing
    2435 Wienerherberg (AT)

(74) Vertreter: Gibler, Ferdinand
    Patentanwalt
    Dipl.-Ing. Dr. Ferdinand Gibler
    Dorotheergasse 7
    1010 Wien (AT)

(54) **Ableitertrennschalter**

(57) Abtrennvorrichtung für Überspannungsableiter (1), umfassend einen in Serie zum zu schützenden Überspannungsableiter (1) geschalteten, von einem Schaltschloß (4) betätigbaren Unterbrechungskontakt (2) und eine Einrichtung (3), die die vom Überspannungsableiter aufgenommene elektrische Energie erfaßt und beim Erreichen einer vorgebbaren Energiemenge, die kleiner oder gleich dem maximalen Energieaufnahmevermögen des zu schützenden Überspannungsableiters ist, das Schaltschloß (4) betätigt.

*Fig. 1a*

(Forts. nächste Seite)

*Fig.1b*

$W = u \cdot i \cdot t$

**Beschreibung**

Die Erfindung betrifft eine Abtrennvorrichtung für Überspannungsableiter, umfassend eine den Strom durch den Überspannungsableiter erfassende Einrichtung und eine von dieser Einrichtung auslösbare, die Abtrennung des Überspannungsableiters vom Netz bewirkende Abschalteinrichtung.

Zur Ableitung von Überspannungen in Spannungsversorgungsnetzen werden verschiedene Bauteile eingesetzt. Die wichtigsten Beispiele sind Funkenstrecken, Varistoren, Suppressordioden od. dgl. Ihnen ist die Spannungsabhängigkeit ihres elektrischen Widerstandes gemeinsam. Das bedeutet, daß sie unterhalb eines Schwellwertes der an sie angelegten Spannung relativ hohe elektrische Widerstände aufweisen, sobald die Spannung jedoch den Schwellwert übersteigt, niederohmig werden.

Diese Eigenschaft kann zur Ableitung von Netzüberspannungen, die am häufigsten von Blitzschlägen hervorgerufen werden, ausgenützt werden. Dazu werden besagte Bauteile in Anlagenzuleitungen zwischen den Phasenleitern L1, L2, L3 und der Erdung PE als auch zwischen dem Neutralleiter N und der Erdung PE eingebaut. Der vorhin angesprochene Spannungs-Schwellwert ist dabei so gewählt, daß die -nun ständig anliegende- Netzspannung unterhalb des Schwellwertes liegt, die Bauelemente im Normalbetrieb also hohe Widerstände aufweisen und damit keine bzw. lediglich geringfügige Leckströme fließen können. Tritt nun eine Überspannung auf, wird der Spannungsschwellwert überschritten, die Bauteile werden damit niederohmig und die Überspannungsenergie wird über die Bauteile nach PE abgeleitet. Eine Anhebung der Netzspannung auf den -unzulässig hohen- Wert der Überspannung kann damit vermieden werden.

Je nach Energiegehalt der Überspannung kommt es im Ableitfall zu relativ hohen -die Überspannungs-Ableitbauteile durchfließenden und diese erwärmenden- Strömen.

Jedes Ableitbauelement ist somit thermischen Belastungen ausgesetzt und kann diesen nur bis zu einem gewissen Grad, seinem maximalen Energieabsorptionsvermögen -abhängig von Bauteiltype, Volumen, Material usw.- standhalten. Wird es über diese Grenze belastet, kommt es zur Zerstörung oder zumindest zu Beschädigungen des Bauteils.

Neben den relativ kurzzeitigen Überspannungen, wie sie z.B. durch Blitzschlag hervorgerufen werden, können auch länger dauernde Netzspannungsanhebungen (sog. TOVs Temporary Over Voltages) auftreten, welche selbstverständlich auch die Ableitelemente in ihren niederohmigen Ableitzustand bringen.

Die Ursache hiefür ist folgende: Ein zur Versorgung einer Anlage herangezogenes Niederspannungsnetz wird über einen Transformator von einem Mittelspannungsnetz versorgt. Beide Sternpunkte -primär- und sekundärseitiger Sternpunkt - des Transformators sind über einen gemeinsamen Erdungswiderstand geerdet.

Beim Auftreten eines Erdschlusses im Mittelspannungsnetz kommt es nun zu einem Stromfluß und als Folge davon zu einem Spannungsabfall über den Erdungswiderstand.

Damit wird aber der sekundärseitige Sternpunkt und damit der Neutralleiter des Niederspannungsnetzes in seinem Potential um besagten Erdungswiderstand-Spannungsabfall angehoben. In weiterer Folge steigt auch die Potentialdifferenz Phasenleiter-Erdung im Niederspannungsnetz.

In der Amplitude sind die TOVs wesentlich niedriger als Blitzüberspannungen, können aber dennoch ein Vielfaches der Nennspannung Phasenleiter - Erde erreichen. Die unangenehmste Eigenschaft der TOVs in Hinblick auf Ableiterbauelemente ist deren relativ lange Einwirkungsdauer. Derartige Überspannungen können nämlich einige hundert Millisekunden lange andauern, stehen also in einem üblichen 50Hz-Netz während einiger Periodendauern an.

Damit ist aber ein lange einwirkender Ableitstrom und in weiterer Folge eine hohe thermische Belastung der Ableiterbauteile verbunden.

Zusammenfassend kann ein Ableiterbauteil von beiden der angeführten Überspannungstypen -Blitzschlag und TOV- beschädigt oder zerstört werden. Als Folge davon erreicht der betreffende Bauteil nach Abklingen der Überspannung nicht mehr seinen vollen Widerstand, sodaß auch im Normalbetrieb nicht mehr vernachlässigbare Ströme gegen Erde PE fließen.

Ein solcherart schadhafter Bauteil muß deshalb erkannt und vom Netz -mittels eines Ableitertrennschalters- abgetrennt werden. Damit eine neuerliche Überspannung wieder gegen Erde PE abgeleitet werden kann, muß in letzter Konsequenz ein Ausgetausch des defekten Bauteils und die Wiedereinschaltung des Ableitertrennschalters erfolgen.

Für die konstruktive Realisierung eines eben in seiner Funktion beschriebenen Ableitertrennschalters wurden bereits einige Vorschläge gemacht.

Die **EP-A1-261 606, EP-A1-613 226** und die **EP-A1-576 395** beschreiben Schutzschaltungsanordnungen, die für jeden Strompfad, der von einer Netzleitung über einen Ableiter geführt wird, eine Abschalteinrichtung vorsehen, wobei diese Strompfade hinter der Abschalteinrichtung zu einer gemeinsamen Erdungsleitung zusammengefaßt werden. In diese gemeinsame Leitung ist eine Überwachungseinrichtung nach dem Fehlerstrom-Schutzschalterprinzip eingebaut. Jeder der vorgeschlagenen Ableitertrennschalter sieht im Sekundärkreis des Summenstromwandlers eine Verzögerungsschaltung vor, mit der verhindert wird, daß der Schalter auch auf von Überspannungen hervorgerufene Ströme anspricht; es wird also eine Stoßstromfestigkeit des Schalters erreicht.

Die **AT-PS-394 285** schlägt vor, den ohnehin vorhandenen FI-Schutzschalter zur Überwachung von fehlerhaften Ableiterbauelementen zu verwenden. Dies geschieht in einfacher Weise dadurch, daß die Ableiter hinter dem FI-Schutzschalter angeordnet werden. Jeder Strom über eine Ableiter stellt einen Strom gegen Erde, also für den FI-Schutzschalter einen seine Auslösung veranlassenden Fehlerstrom dar, sodaß durch unzulässig hohe Ableiterströme die Abschaltung des FI-Schutzschalters bewirkt wird.

Nach der **AT-PS-391 571** ist je ein Ableitertrennschalter pro Ableiterbauelement vorgesehen. Das Funktionsprinzip des Trennschalters ist wieder das eines FI-Schutzschalters. Der Strom durch den Ableiter wird über einen Durchsteckwandler erfaßt. Der in der Sekundärspule dieses Durchsteckwandlers hervorgerufene Strom lädt einen Kondensator, bei Erreichen einer bestimmten Ladespannung wird die Öffnung eines in Serie zum Ableiterbauteil liegenden Kontaktes ausgelöst.

In all den genannten Lösungsvorschlägen wird stets die Beschädigung bzw. Zerstörung eines Ableiterbauelementes abgewartet und erst danach aufgrund des daraus resultierenden unzulässig hohen Ableiterstromes die Abtrennung der Überspannungsableiteinrichtung bzw. des defekten Ableiterbauteils veranlaßt.

Es wird damit in Kauf genommen, daß Ableiterbauteile auch durch nur geringfügig über der Nennspannung liegende -und damit eher ungefährliche- Überspannungen thermisch zerstört werden, wodurch sich der offensichtliche Nachteil des relativ hohen Verschleißes von Ableiterbauteilen ergibt.

Aufgabe der vorliegenden Erfindung ist es daher, einen Ableitertrennschalter der eingangs zitierten Art anzugeben, bei welchem eine vom Stromfluß verursachte thermische Überlastung eines Ableiterbauteiles nicht abgewartet werden muß, sondern vielmehr eine solche Überlastung verhindert werden kann.

Erfindungsgemäß wird dies dadurch erreicht, daß die Einrichtung die vom Überspannungsableiter aufgenommene elektrische Energie erfaßt und beim Erreichen einer vorgebbaren Energiemenge, die kleiner oder gleich dem maximalen Energieaufnahmevermögen des zu schützenden Überspannungsableiters ist, die Abschalteinrichtung betätigt.

Damit wird vor oder bei Erreichen der maximal zulässigen Erwärmung des Ableiters die Energie- und damit die Wärmezufuhr gestoppt, sodaß daraus resultierende Beschädigungen bzw. Zerstörungen vermieden werden können.

Nach einer ersten Ausführungsform der Erfindung kann vorgesehen sein, daß die Abschalteinrichtung einen in Serie zum Überspannungsableiter geschalteten, von einem Schaltschloß betätigbaren Unterbrechungskontakt aufweist.

Dies stellt eine mit besonders wenig Materialaufwand verbundene Gestaltungsmöglichkeit der Abschalteinrichtung dar.

Nach einer zweiten Ausführungsform der Erfindung kann vorgesehen sein, daß die Abschalteinrichtung eine in Serie zum Überspannungsableiter geschaltete Überspannungsschutzeinrichtung, vorzugsweise Schmelzsicherung, und einen parallel zum Überspannungsableiter geschalteten, von einem Schaltschloß betätigbaren Kurzschlußkontakt aufweist.

Das Abschalten der Ableiter erfolgt damit nicht durch Kontaktöffnung sondern durch Auslösen einer Überstromschutzeinrichtung, vorzugsweise durch Abschmelzen einer Sicherung, was durch das besonders rasch durchführbare Kurzschließen des Überspannungsableiters hervorgerufen wird. Bei Sicherungen ist -verglichen mit Kontakten-auf wesentlich einfachere Weise ein großer "Kontaktabstand" realisierbar, sodaß das Ausbilden eines Lichtbogens und damit die Verzögerung bzw. Verhinderung der Abschaltung zuverlässig unterbunden werden kann.

Eine besonders bevorzugte Ausführungsform der Erfindung kann darin bestehen, daß die Energieerfassungs-Einrichtung gebildet ist aus einer Serienschaltung einer ersten Schaltung zur Bildung eines dem Strom durch den Überspannungsableiter proportionalen Signales, einer zweiten Schaltung welche besagtes Signal über die Zeit integriert und einer Schwellwerterkennungs-Schaltung, welche das Schaltschloß betätigt.

Diese Ausgestaltungsmöglichkeit kann bei Ableiterbauteilen, bei welchen die an ihnen abfallende Spannung im niederohmigen Zustand annähernd konstant und bekannt ist, angewandt werden. Eine Einrichtung zur Detektion besagter Spannung kann eingespart werden, was die Gesamtheit der Energieerfassungs-Einrichtung wesentlich vereinfacht.

In Weiterbildung der Erfindung kann vorgesehen sein, daß die Schaltung zur Bildung eines dem Strom durch den Überspannungsableiter proportionalen Signales durch einen Stromwandler, vorzugsweise einen Durchsteckwandler, gebildet ist.

Damit kann ein galvanisch vom Ableiterstrom getrennter, in seiner Amplitude wesentlich kleinerer Meßstrom erzeugt werden.

Nach einer anderen Ausgestaltungsweise kann vorgesehen sein, daß die Schaltung zur Bildung eines dem Strom durch den Überspannungsableiter proportionalen Signales durch ein Hall-Sonde gebildet ist.

Hiermit kann ebenfalls ein galvanisch getrenntes Signal, diesmal in Form einer Spannung erzeugt werden.

Eine weitere Ausbildungsmöglichkeit der Erfindung kann darin gelegen sein, daß die Schaltung zur Bildung eines dem Strom durch den Überspannungsableiter proportionalen Signales durch eine Induktionsspule gebildet ist.

Wie bei der Hall-Sonde wird auch durch eine solche Stromerfassungs-Einrichtung eine dem Strom proportionale Spannung erhalten, wobei hier Herstellung und Beschaltung wesentlich einfacher sind als bei einer Hall-Sonde.

Ein weiteres Merkmal der Erfindung kann sein, daß die Integier-Schaltung eine Gleichrichterschaltung und einen Kondensator umfaßt.

Dies erlaubt eine besonders einfache, funktionszuverlässige Realisierung der Integrierfunktion.

In diesem Zusammenhang kann auch vorgesehen sein, daß die Integrier-Schaltung eine Gleichrichterschaltung und einen als Integrator beschalteten Operationsverstärker umfaßt.

Die Verstärkung einer solchen Operationsverstärker-Schaltung ist über die Auswahl der sie bildenden Bauteile einstellbar, sodaß die Amplitude des Ausgangssignales sehr einfach den Anforderungen der nachgeschalteten Baugruppen abpaßbar ist.

Weiters kann vorgesehen sein, daß die Schwellwerterkennungs-Schaltung durch eine Z-Diode gebildet ist.

Ein derartiges Bauteil weist eine genau definierte, zeitlich konstante Schaltschwelle auf, womit ein zeitlich gleichbleibendes Schaltverhalten des Ableitertrennschalters sichergestellt werden kann.

Eine andere Variante der Realisierung der Erfindung kann darin gelegen sein, daß die Schwellwerterkennungs-Schaltung durch einen Operationsverstärker gebildet ist.

Die Schaltschwelle eine solchen Anordnung kann besonders einfach durch Auswahl der Referenzspannung eingestellt und auch verändert werden.

Nach einer weitere Ausgestaltungsmöglichkeit kann vorgesehen sein, daß die Schwellwerterkennungs-Schaltung durch eine in Sperrichtung betriebene Transistorstruktur gebildet ist.

Im Gegensatz zur eben erläuterten Operationsverstärker-Schaltung benötigt eine solche Transistorstruktur keine Betriebsspannung, sodaß die zu ihrer Erzeugung notwendigen Baugruppen entfallen können.

Nach einer besonders bevorzugten Ausführungsform der Erfindung kann vorgesehen sein. daß der Schaltung zur Bildung eines dem Strom durch den Überspannungsableiter proportionalen Signales eine Filterschaltung nachgeschaltet ist, welche das Ableiterstrom-proportionale Signal auf Frequenzen kleiner bzw. gleich der Netzfrequenz begrenzt.

Damit wird die Wahrscheinlichkeit von Fehlauslösungen bei kurzzeitigen Überspannungen, die eigentlich ungestört abgeleitet werden sollten, zuverlässig herabgesetzt.

In diesem Zusammenhang kann in weiterer Ausgestaltung der Erfindung vorgesehen sein, daß die Filterschaltung Tiefpaß- oder Bandpaß-Charakteristik aufweist.

Damit wird die Einwirkung von hochfrequenten Ableiterströmen auf die Schaltschloßauslösung zuverlässig unterdrückt.

Die Erfindung wird nun anhand der beigeschlossenen Zeichnungen näher erläutert.

Die einzelnen Figuren zeigen:

Fig.1a ein Prinzip-Blockschaltbild einer ersten Ausführungsform eines erfindungsgemäßen Ableitertrennschalters;

Fig.1b ein Prinzip-Blockschaltbild einer zweiten Ausführungsform eines erfindungsgemäßen Ableitertrennschalters;

Fig.2 das Prinzip-Blockschaltbild nach Fig.1a für die Anwendung bei Varistoren mit detaillierterer Darstellung der Energieerfassungs-Schaltung;

Fig.3 das maximale Energieabsorptionsvermögen eines Varistors in Form eines Strom/Zeit-Diagrammes;

Fig.4a-c Schaltbilder zweier praktischer Ausführungen eines erfindungsgemäßen Ableitertrennschalters mit einer netzspannungsunabhängigen Schaltschloß-Auslösung;

Fig.5 den Ableitertrennschalter nach Fig.4a,b mit einer netzspannungsabhängigen Schaltschloß-Auslösung und

Fig.6a-c verschiedene Ausführungsformen der die Belastung des Ableiterbauelementes erfassenden Schaltung.

Grundlegender Gedanke der Erfindung ist es, eine thermische Überlastung des Ableiterbauteiles, die durch den ihn durchfließenden Strom hervorgerufen wird, zu verhindern.

Dazu ist vorgesehen, die Menge der einem Ableiter wie Varistor, Suppressordiode od. dgl. zugeführten elektrischen Energie zu überwachen und spätestens bei Erreichen des maximalen Energieaufnahmevermögens des Bauelementes, vorzugsweise jedoch bei einem etwas unterhalb dieses Maximalaufnahmevermögens liegenden Wertes, den Ableiter vom Netz zu trennen.

Ein Prinzipschaltbild eines Ableitertrennschalters, mit dem diese Forderungen erreicht werden können, ist in Fig.1a dargestellt. Der erfindungsgemäße Trennschalter umfaßt eine den Strom durch den Überspannungsableiter 1 erfassende Einrichtung 3 und eine von dieser Einrichtung 3 auslösbare, die Abtrennung des Überspannungsableiters 1 vom Netz bewirkende Abschalteinrichtung. Diese ist bei der Ausführungsform nach Fig. 1a durch einen in Serie zum zu schützenden Überspannungsableiter 1 geschalteten Unterbrechungskontakt 2 gebildet, der von einem Schaltschloß 4 betätigbar ist.

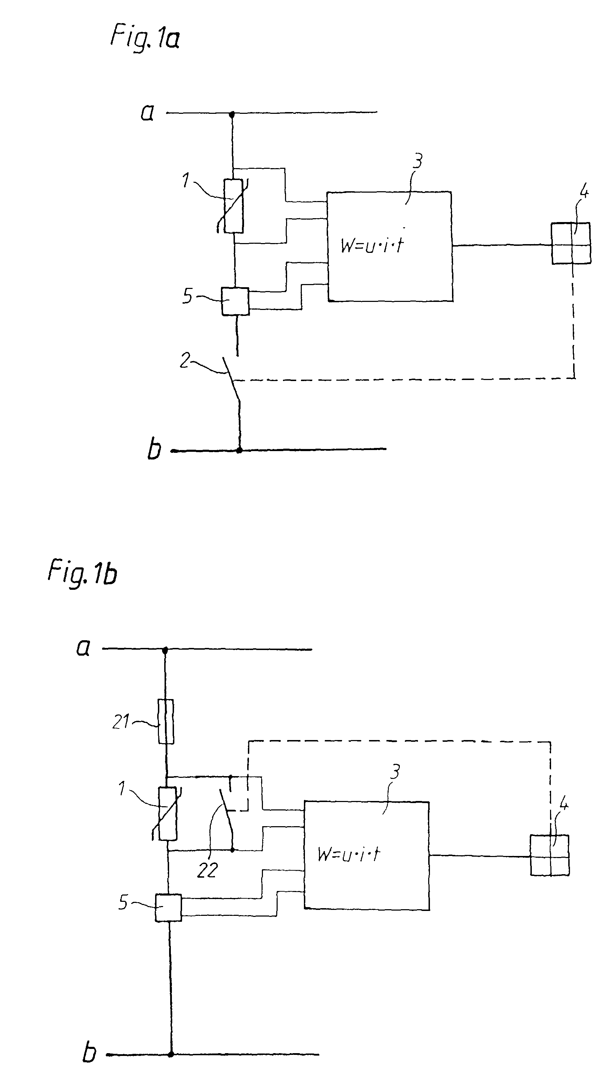

Eine zweite Ausführungsform der Abschalteinrichtung zeigt Fig.1b. Hier besteht die Abschalteinrichtung aus zwei Teilen, nämlich einer in Serie zum Überspannungsableiter 1 geschalteten Überspannungsschutzeinrichtung 21, die vorzugsweise als Schmelzsicherung ausgeführt ist, und einen parallel zum Überspannungsableiter 1 geschalteten, von einem Schaltschloß 4 betätigbaren Kurzschlußkontakt 22.

Die mit a,b bezeichneten Leitungen können durch beliebige Leiter eines Stromversorgungsnetzes gebildet sein. Im herkömmlichen Dreiphasennetz wird die Leitung a in den häufigsten Fällen durch einen Phasenleiter L1, L2 oder L3 und Leitung b durch den Schutzleiter PE gebildet sein; im Sinne der Erfindung ist es jedoch genauso möglich, besagte Serienschaltung aus Überspannungsableiter 1 und Unterbrechungskontakt 2 zwischen andere Leiterpaare, z.B.: L1-N, L2-N, L3-N, L1-L2 od. dgl. zu schalten.

Nachdem die einem resistiven Bauelement zugeführte Energie gemäß der Formel:

$$W = u \cdot i \cdot t$$

berechnet werden kann, ist eine Einrichtung 3 vorgesehen, welche die am Ableiter 1 anliegende Spannung sowie den Strom durch den Ableiter 1 erfaßt und die obige Berechnung durchführt.

Sobald die errechnete Energiemenge einen vorgebbaren -eben das Maximalaufnahmevermögen bzw. einen knapp unterhalb des maximalen Aufnahmevermögens liegenden- Wert erreicht, wird das Schaltschloß 4 betätigt, wodurch in weiterer Folge bei der Ausführungsvariante nach Fig.1a der Unterbrecherkontakt 2 geöffnet und der Ableiter 1 vom Netz getrennt wird; bei der Ausführungsvariante nach Fig.1b der Kurzschlußkontakt 22 geschlossen und der Überspannungsableiter 1 dadurch niederohmig überbrückt wird. Der auf diese Weise zwischen den Leitungen a,b entstehende Kurzschluß ruft einen großen Strom über die Überstromschutzeinrichtung 21 hervor, wodurch diese auslöst und so den Ableiter 1 vom Netz trennt.

Wenn es sich bei dem zu schützenden Ableiter 1 um einen Varistor handelt, was in der Praxis sehr häufig der Fall ist, so kann eine Vereinfachung dieser Prinzipschaltbilder Fig.1a, Fig.1b vorgenommen werden. Ein Varistor hat nämlich in seinem niederohmigen Zustand die Eigenschaft, daß die an ihm abfallende Spannung einen konstanten, nahezu vom Strom unabhängigen, bekannten Wert aufweist.

Die zugeführte Energie ist damit nur mehr einer Unbekannten, dem Produkt $i \cdot t$, also dem Integral des Stromes über die Zeit proportional. Für die Durchführung der oben erläuterten Berechnung braucht daher nur mehr dieses Produkt $i \cdot t$ erfaßt werden.

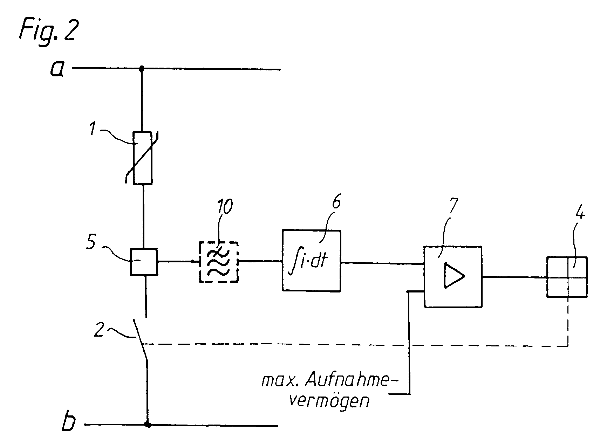

Wie in Fig.2 dargestellt, braucht eine Energieerfassungs-Einrichtung 3 für Varistoren demzufolge nur noch aufweisen:
eine erste Schaltung 5, die ein dem Strom durch den Überspannungsableiter 1 proportionales Signal bildet, eine zweite Schaltung 6, die besagtes Signal über die Zeit integriert und eine Schwellwert-Erkennungsschaltung 7 -symbolisiert durch einen Komparator-, die das Schaltschloß 4 betätigen kann, was sie spätestens dann macht, wenn die dem Ableiter 1 zugeführte Energie das maximale Absorptionsvermögen erreicht. Anstelle des dargestellten Unterbrechungskontaktes 2 kann wieder entsprechend Fig.1b ein Kurzschlußkontakt 22 in Verbindung mit einer Überstromschutzeinrichtung 21 treten, was in Fig.2 nicht mehr explizit dargestellt wurde.

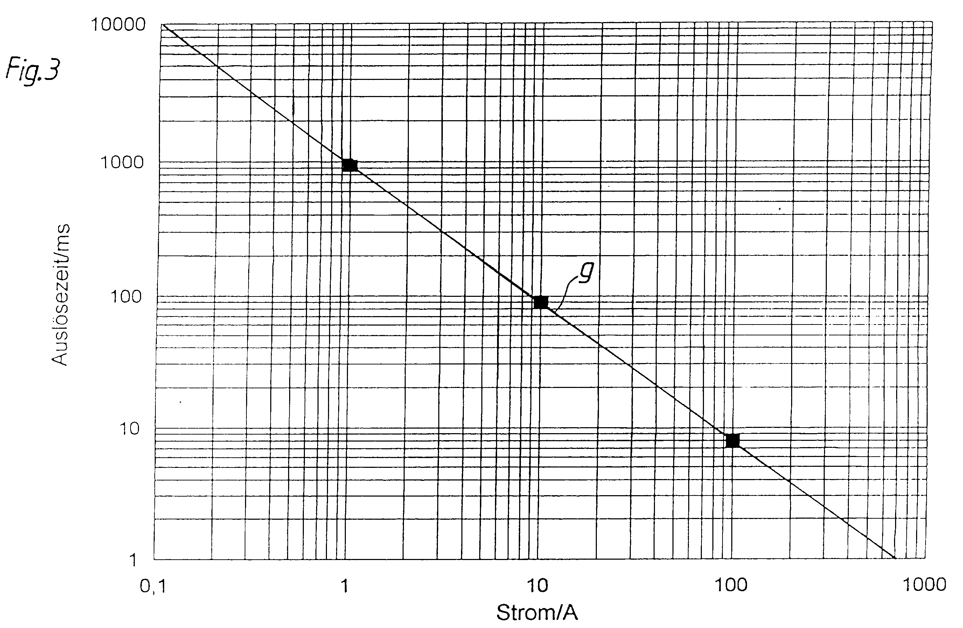

Besonders einfach läßt sich die erläuterte Abschaltbedingung graphisch darstellen, so wie dies in Fig.3 durchgeführt wurde. Ausgangspunkt für dieses Diagramm ist die Gleichung für das maximale Energieab-sorptionsvermögen eines Varistors:

$$W_{max} = u \cdot i \cdot t, \text{ mit } u=const => W_{max} \text{ prop. } i \cdot t$$

Die eingetragene Gerade g ist die Menge aller Punkte, in denen das Produkt $i \cdot t$ einen konstanten Wert aufweist, der multipliziert mit der konstanten Spannung das maximale Energieabsorptionsvermögen eines Varistors ergibt.

Erfindungsgemäß ist nun vorgesehen, daß die Abschaltkennlinie des Ableitertrennschalters - egal wie deren genauer Verlauf aussieht- mit allen ihren Punkten unterhalb der Geraden g liegt. Damit kann dem zu schützenden Ableiter niemals eine zu hohe, ihn beschädigende Energiemenge zugeführt werden.

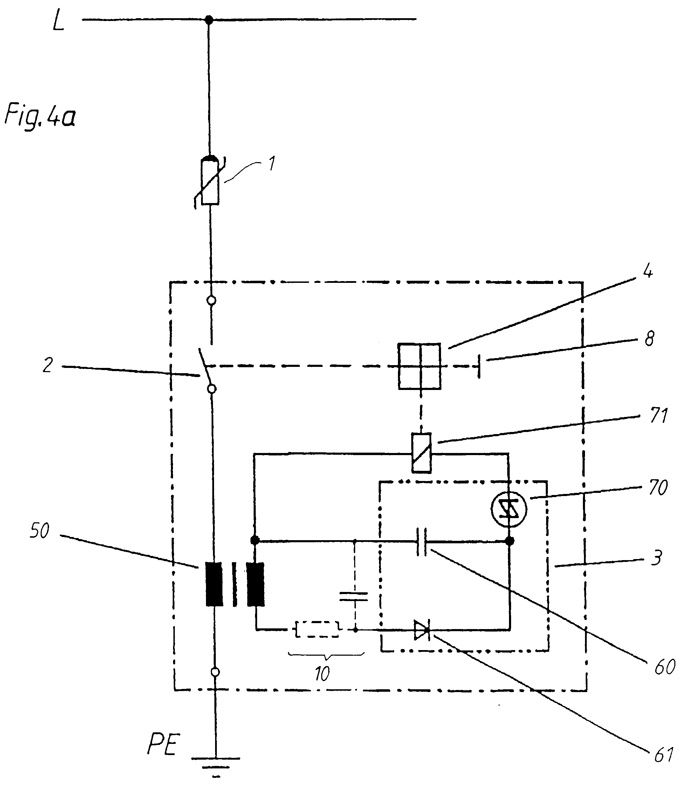

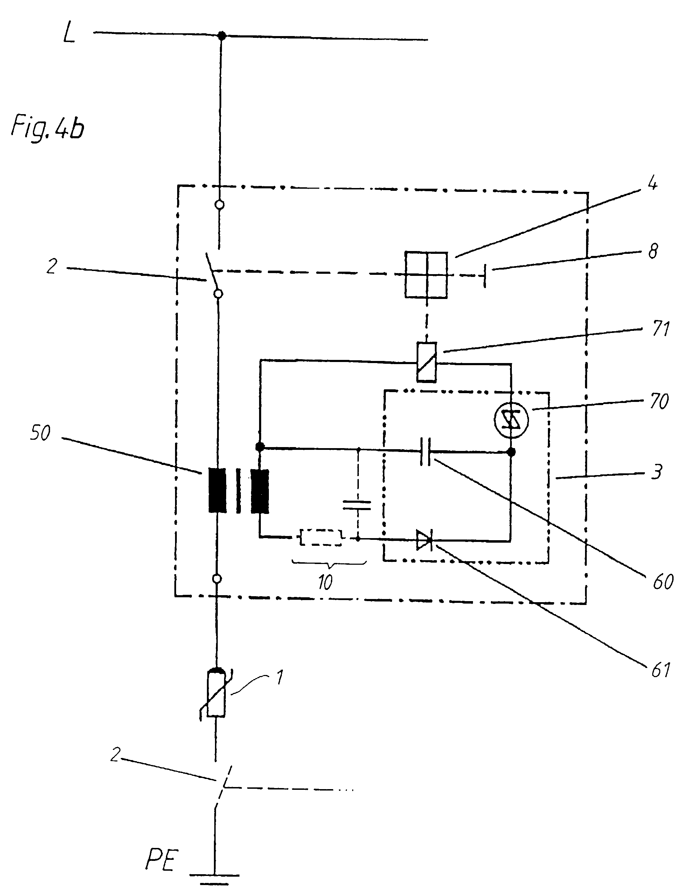

Eine besonders einfache praktische Realisierung des Blockschaltbildes nach Fig.2 ist in Fig.4a,b dargestellt und soll nun beschrieben werden.

Es ist wieder der Überspannungsableiter 1 vorhanden, in dessen Strompfad ein Unterbrecherkontakt 2 angeordnet ist. Wie in Fig.4a dargestellt, ist der Unterbrecherkontakt 2 dem Überspannungsableiter 1 nachgeschaltet. Diese Anordnung ist aber keineswegs zwingend vorzusehen, vielmehr kann -wie aus Fig.4b ersichtlich- der Unterbrecherkontakt 2 dem Überspannungsableiter 1 vorgeschaltet sein. Auch eine allpolige Abschaltung des Ableiters 1 durch Vorsehen von vom Schaltschloß 4 betätigten Unterbrechungskontakten 2 in seinen beiden Zuleitungen -wie dies mit strichlierten Linien in Fig.4b eingetragen ist- ist möglich.

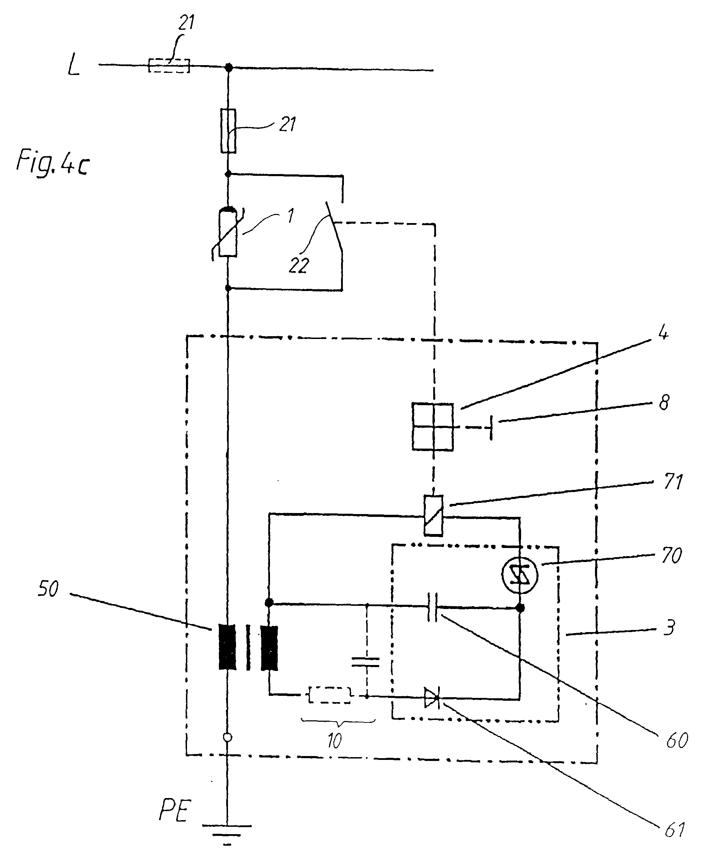

Fig.4c zeigt die praktische Realisierung des Blockschaltbildes nach Fig.2, wobei die Abschalteinrichtung entsprechend Fig.1b ausgestaltet ist. Wie mit strichlierten Linien angedeutet, kann die Überstromschutzeinrichtung 21 aus dem Stromkreis des Ableiters 1 herausgenommen und der gesamten Anlage vorgeschaltet werden. Beim Ansprechen der Abschalteinrichtung wird damit nicht nur lediglich der Ableiter 1 sondern die gesamte Verbraucheranlage vom Netz getrennt. Die Überstromschutzeinrichtung 21 kann bei einer solchen Anordnung durch die ohnehin vorhandene Hausanschlußsicherung gebildet sein. Der Strom durch den Ableiter 1 wird in diesen Ausführungsbeispielen mittels eines Stromwandlers 50 erfaßt. Als besonders günstig hat sich aufgrund der kleinen Bauform hiefür ein Durchsteckwandler erwiesen.

Alternativ zu einem Stromwandler 50 kann jedoch auch jede andere Möglichkeit der Strommessung verwendet werden, Beispiele hiefür wären eine Hall-Sonde oder eine Induktionsspule, in der der Strom durch den Ableiter 1 eine Spannung induziert, welche unmittelbar als stromproportionales Signal verwendet wird.

Die strichliert eingezeichnete Filterschaltung 10 ist, wie später noch erläutert werden wird, nur optional vorhanden und sei vorläufig nicht eingebaut, der Kondensator also herausgenommen und der Widerstand durch einen Kurzschluß ersetzt.

Das von den Stromsensoren gelieferte Signal muß nun über die Zeit integriert werden. Je nach Form des vom Stromsensor gelieferten Signales müssen hiefür entsprechende Bauteile eingesetzt werden. Im Fall der Ausführung nach Fig.4 ist das ableiterstromproportionale Signal wieder eine Strom, der nach seiner Gleichrichtung durch die Diode 61 besonders einfach mittels eines Kondensators 60 über die Zeit aufintegriert werden kann: $U_c = 1/C \cdot \int i \, dt$. Das Ergebnis des Integrals liegt also in Form der momentanen Kondensatorspannung vor.

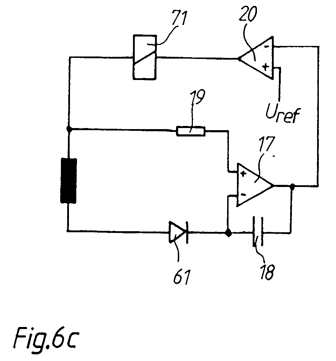

Bei Verwendung eines spannungsliefernden Stromsensors ist selbstredend eine Schaltung, die Spannungswerte aufintegrieren kann, zu verwenden, einfachstes Beispiel hiefür ist ein als Integrator beschalteter Operationsverstärker, vgl. Fig.6c.

Die Kondensatorspannung wird über eine Z-Diode 70 an ein Auslöserelais 71 geführt, welches Auslöserelais 71 mit dem Schaltschloß 4 in Wirkverbindung steht. Sobald die Kondensatorspannung den Wert der Durchbruchspannung der Z-Diode 70 überschreitet, entlädt sich der Kondensator 60 über das Auslöserelais 71 und leitet damit die Abschaltung ein, die wie dargestellt durch Öffnung des Unterbrecherkontaktes 2 aber auch entsprechend dem Prinzipschaltbild nach Fig.lb durch Kurzschließen des Ableiter 1 und nachfolgendes Auslösen einer dem Ableiter 1 vorgeschalteten Überstromschutzeinrichtung 21, erfolgen kann.

Die Kapazität des Kondensators 60 und die Durchbruchsspannung der Z-Diode 70 werden dabei so dimensioniert, daß die Abschaltung in erfindungsgemäßer Weise vor Erreichen des maximalen Energieaufnahmevermögens des Ableiters erfolgt.

Zur Wiedereinschaltung des Ableitertrennschalters ist ein manuell betätigbares Rückstellorgan 8 vorgesehen. Sofern die Abschalteinrichtung durch Kurzschlußkontakt 22 und Überstromschutzeinrichtung 21 gebildet ist, muß zusätzlich zur Rückstellung des Schaltschlosses 4 auch eine Wiedereinschaltung bzw. ein Austausch der Überstromschutzeinrichtung 21, vorgenommen werden.

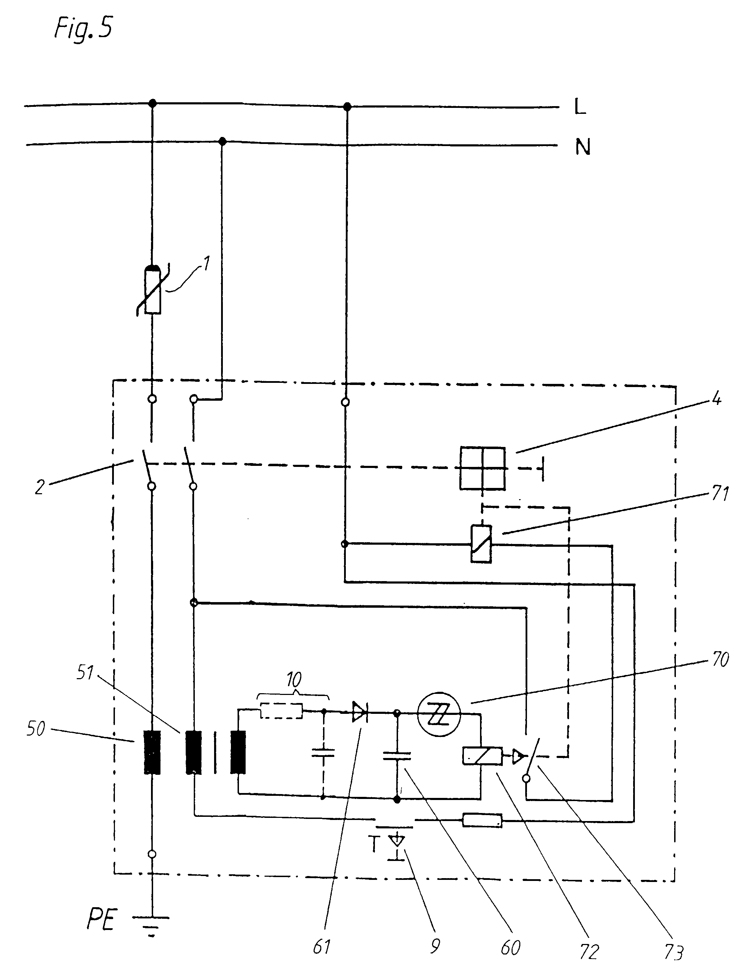

Die eben beschriebene Art der Schaltschloßbetätigung arbeitet netzspannungsunabhängig. genauso liegt es aber im Rahmen der Erfindung, die Schaltschloß-Auslösung wie in Fig.5 dargestellt, netzspannungsabhängig zu gestalten.

Der prinzipielle Aufbau entspricht jenem von Fig.4a, hier entlädt sich der Kondensator 60 jedoch über ein Relais 72, das das Schaltschloß 4 nicht unmittelbar betätigt, sondern über einen Kontakt 73 das Auslöserelais 71 mit dem Netz verbindet. Das Auslöserelais 71 spricht damit an und betätigt das mit ihm in Wirkverbindung stehende Schaltschloß 4.

Anstatt des Unterbrecherkontaktes 2 kann auch hier wieder ein den Überspannungsableiter 1 überbrückender Kurzschlußkontakt 22 in Verbindung mit einer in Serie zum Überspannungsableiter 1 liegenden Überstromschutzeinrichtung 21 verwendet werden.

Wie bei Schutzschalter jeder Art üblich, kann auch bei einem erfindungsgemäßen Ableitertrennschalter eine Prüfeinrichtung vorgesehen sein. Diese ist gebildet durch eine zweite Primärspule 51 des Stromwandlers 50, welche über einen Taster 9 mit dem Netz verbunden werden kann. Bei Betätigung des Tasters 9 wird ein unzulässig hoher Strom durch den Ableiter 1 simuliert, der bei ordnungsgemäßer Funktion des Schalters seine Auslösung bewirkt.

In den Fig.4 und 5 ist die Serienschaltung aus Überspannungsableiter 1 und Unterbrechungskontakt 2 bzw. die Serienschaltung aus kurzschließbarem Überspannungsableiter 1 und Überstromschutzeinrichtung 21 stets zwischen L und PE eingesetzt. Dies soll aber -wie bereits im Zusammenhang mit der Erläuterung der Fig. 1 und 2 erwähnt- keine Einschränkung der Anwendung der Erfindung auf diese beiden Leitungen bedeuten; besagte Serienschaltungen können vielmehr zwischen zwei beliebigen Leitungspaaren eines Stromversorgungsnetzes eingebaut sein.

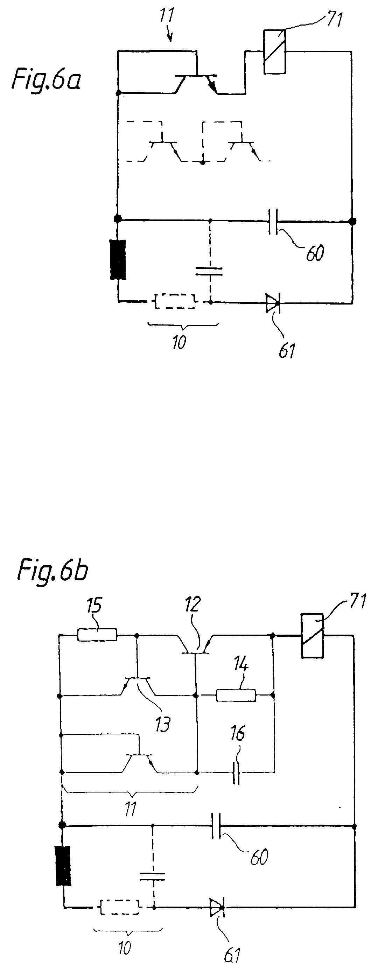

Die bisher beschriebene Schwellwerterkennung durch eine Z-Diode 70 kann im Sinne der Erfindung auch durch andere Maßnahmen erfolgen, so wie dies in den Fig.6a-c dargestellt ist. Der Übersichtlichkeit halber wurde in diesen Figuren lediglich die Beschaltung des Auslöserelais 71 dargestellt, die restlichen Komponenten des erfindungsgemäßen Ableitertrennschalters jedoch weggelassen.

In Fig.6a ist die Z-Diode durch eine in Sperrichtung betriebene Transistorstruktur 11 gebildet, die im einfachsten Fall aus einem einzigen Transistor besteht. Die Basis-EmitterStrecke dieses Transistors ist in Sperrichtung in Serie zum Auslöserelais 71 geschaltet, bricht - ähnlich einer Z-Diode- bei einer genau definierten Spannung durch und ermöglicht damit einen Stromfluß durch das Auslöserelais 71. Durch Serienschaltung mehrerer -strichliert eingetragener- Transistoren kann die Durchbruchspannung der Transistorstruktur 11 auf einfache Weise erhöht werden.

Im Normalfall können über die Basis-Emitterstrecke eines Transistors nur kleine Ströme, die in der Regel zu gering sind, um ein Ansprechen des Auslöserelais 71 zu bewirken, geleitet werden. Es ist daher notwendig, die Transistorstruktur 11 mit weiteren, leistungsfähigeren Schaltbauelementen zu erweitern; eine Möglichkeit hiefür ist in Fig.6b dargestellt.

Die Transistorstruktur 11 ist mit Transistoren 12 und 13 sowie den Widerständen 14 und 15 beschaltet. Ein Kondensator 16 kann vorteilhaft sein, um Störsignale kurzzuschließen. Die Transistoren 12 und 13 sind in einer Mitkoppelschaltung angeordnet. Die Widerstände 14 und 15 sorgen für ein hochohmiges Anschließen der Transistorstruktur 11, wodurch sich diese nicht als Bürde für den Kondensator 60 während dessen Aufladung auswirkt. Die Transistoren 14, 15 sind vorteilhaft mit hoher Stromverstärkung zu wählen. Wenn die Transistorstruktur 11 in ihrer Sperrichtung leitend wird, sorgt der Spannungsabfall am Widerstand 14 dafür, daß der Transistor 12 in den leitenden Zustand gesteuert wird.

Der dann über den Widerstand 15 fließende Strom führt zu einem Spannungsabfall, der den Transistor 13 leitend steuert. Über den Widerstand 14 wird dann ein noch größerer Strom gezogen, da der Spannungsabfall am Transistor 13 im leitenden Zustand wesentlich niedriger ist.

Der das Auslöserelais 71 betätigende Strom fließt also zusammenfassend nahezu vollständig über die leitenden Emitter-Kollektor-Strecken der Transistoren 12, 13 und kann daher ohne Beschädigungen hervorzurufen die für die Auslöserelais-Betätigung notwendigen Amplituden annehmen.

Nach einer weiteren, in Fig.6c dargestellten Ausführungsform der Erfindung ist die Schwellwerterkennung durch einen als Komparator beschalteten Operationsverstärker 20 gebildet. Das Integrieren des dem Ableiterstrom proportionalen Signales erfolgt durch einen weiteren Operationsverstärker 17, der durch an sich bekannte Beschaltung mit einem Widerstand 19 und einem Kondensator 18 als Integrator betrieben ist.

Die in den Fig.6a-c gezeigten Schwellwerterkennungs-bzw. Integrier-Schaltungen können in beliebigen Kombinationen eingesetzt werden: Beispielsweise kann der Kondensator 60 in

Fig.6a,b durch den Operationsverstärker 17 nach Fig.6c ersetzt werden; umgekehrt ist auch ein Ersatz des als Komparator wirkenden Operationsverstärkers 20 durch eine Transistorstruktur 11 der Fig.6a,b denkbar.

Beim Auftreten unzulässig hoher Überspannungen muß der Ableiter ungestört, d.h. ohne daß der Ableitertrennschalter auslöst, ableiten können. Bei einem Schalter der bislang beschriebenen Art ist dies nur dann gegeben, wenn der Energiegehalt des Überspannungsstoßes unter dem maximalen Energieaufnahmevermögen des Ableiters bleibt. Sinn eines Überspannungsableiters ist es aber, Überspannungen unabhängig von ihrem Energiegehalt. auch wenn sie die Zerstörung des Ableiters zur Folge hätten, abzuleiten. Die Stoßstromfestigkeit des Ableitertrennschalters -die in der bislang behandelten Ausführungsweise nur in Bezug auf "energiearme" Überspannungsstöße gegeben ist- ist demnach auch auf "energiereiche" Überspannungstöße auszuweiten.

Für das Erreichen dieser Vorgabe ist erfindungsgemäß vorgesehen, daß den zu schützenden Ableiter 1 durchfließende Ströme, deren Frequenzen größer als die Netzfrequenz sind, also von kurzzeitigen Überspannungen, z.B. Blitzüberspannungen- hervorgerufen werden, bei der Berechung der dem Ableiter 1 zugeführten elektrischen Energie unberücksichtigt bleiben.

Schaltungstechnisch wird dies so realisiert, daß der Schaltung 5 zur Bildung eines dem Strom durch den Überspannungsableiter 1 proportionalen Signales eine Filterschaltung 10 nachgeschaltet ist, welche das Ableiterstrom-proportionale Signal auf Frequenzen kleiner bzw. gleich der Netzfrequenz begrenzt. Die eingangs erwähnten TOVs haben Netzfrequenz und fließen daher vollumfänglich in die Berechung der Energieaufnahme ein, der Ableitertrennschalter spricht daher weiterhin auf sie an.

Zur Erfüllung der erwähnten Unterdrückungs-Funktion muß besagte Filterschaltung 10 Tiefpaß- oder Bandpaßcharakteristik aufweisen und auf die Netzfrequenz ausgelegt sein.

In Fig. 2 wurde diese Filterschaltung 10 mit strichlierten Linien eingetragen. Die praktische Realisierung kann durch eine einfache passive RC-Schaltung, so wie in den Fig.4 u. 5 dargestellt, aber auch durch jede andere bekannte Schaltung, die die geforderten Übertragungseigenschaften aufweist, erfolgen.

## Patentansprüche

1. Abtrennvorrichtung für Überspannungsableiter (1), umfassend eine den Strom durch den Überspannungsableiter (1) erfassende Einrichtung (3) und eine von dieser Einrichtung (3) auslösbare, die Abtrennung des Überspannungsableiters (1) vom Netz bewirkende Abschalteinrichtung, **dadurch gekennzeichnet,** daß die Einrichtung (3) die vom Überspannungsableiter (1) aufgenommene elektrische Energie erfaßt und beim Erreichen einer vorgebbaren Energiemenge, die kleiner oder gleich dem maximalen Energieaufnahmevermögen des zu schützenden Überspannungsableiters ist, die Abschalteinrichtung betätigt.

2. Abtrennvorrichtung nach Anspruch 1, **dadurch gekennzeichnet,** daß die Abschalteinrichtung einen in Serie zum Überspannungsableiter (1) geschalteten, von einem Schaltschloß (4) betätigbaren Unterbrechungskontakt (2) aufweist.

3. Abtrennvorrichtung nach Anspruch 1, **dadurch gekennzeichnet,** daß die Abschalteinrichtung eine in Serie zum Überspannungsableiter (1) geschaltete Überspannungsschutzeinrichtung (21), vorzugsweise Schmelzsicherung, und einen parallel zum Überspannungsableiter (1) geschalteten, von einem Schaltschloß (4) betätigbaren Kurzschlußkontakt (22) aufweist.

4. Abtrennvorrichtung nach Anspruch 1, 2 oder 3, **dadurch gekennzeichnet,** daß die Energieerfassungs-Einrichtung (3) gebildet ist aus einer Serienschaltung einer ersten Schaltung (5) zur Bildung eines dem Strom durch den Überspannungsableiter (1) proportionalen Signales, einer zweiten Schaltung (6) welche besagtes Signal über die Zeit integriert und einer Schwellwerterkennungs-Schaltung (7), welche das Schaltschloß (4) betätigt.

5. Ableitertrennvorrichtung nach Anspruch 4, **dadurch gekennzeichnet,** daß die Schaltung (5) zur Bildung eines dem Strom durch den Überspannungsableiter (1) proportionalen Signales durch einen Stromwandler, vorzugsweise einen Durchsteckwandler, gebildet ist.

6. Ableitertrennvorrichtung nach Anspruch 4, **dadurch gekennzeichnet,** daß die Schaltung (5) zur Bildung eines dem Strom durch den Überspannungsableiter (1) proportionalen Signales durch ein Hall-Sonde gebildet ist.

7. Ableitertrennvorrichtung nach Anspruch 4, **dadurch gekennzeichnet,** daß die Schaltung (5) zur Bildung eines dem Strom durch den Überspannungsableiter (1) proportionalen Signales durch eine Induktionsspule gebildet ist.

8. Ableitertrennvorrichtung nach einem der Ansprüche 4 bis 7, **dadurch gekennzeichnet,** daß die Integier-Schaltung (6) eine Gleichrichterschaltung (61) und einen Kondensator (60) umfaßt.

9. Ableitertrennvorrichtung nach einem der Ansprüch 4 bis 7, **dadurch gekennzeichnet,** daß die Integrier-Schaltung (6) eine Gleichrichterschaltung (61) und einen als Integrator beschalteten Operationsverstärker (17) umfaßt.

10. Ableitertrennvorrichtung nach einem der Ansprüche 4 bis 9, **dadurch gekennzeichnet,** daß die Schwellwerterkennungs-Schaltung (7) durch eine Z-Diode (70) gebildet ist.

11. Ableitertrennvorrichtung nach einem der Ansprüche 4 bis 9, **dadurch gekennzeichnet,** daß die Schwellwerterkennungs-Schaltung (7) durch einen Operationsverstärker (20) gebildet ist.

12. Ableitertrennvorrichtung nach einem der Ansprüche 4 bis 9, **dadurch gekennzeichnet,** daß die Schwellwerterkennungs-Schaltung (7) durch eine in Sperrichtung betriebene Transistorstruktur (11) gebildet ist.

13. Ableitertrennvorrichtung nach einem Ansprüche 4 bis 12, **dadurch gekennzeichnet.** daß der Schaltung (5) zur Bildung eines dem Strom durch den Überspannungsableiter (1) proportionalen Signales eine Filterschaltung (10) nachgeschaltet ist, welche das Ableiterstrom-proportionale Signal auf Frequenzen kleiner bzw. gleich der Netzfrequenz begrenzt.

14. Abtrennvorrichtung nach Anspruch 13, **dadurch gekennzeichnet,** daß die Filterschaltung (10) Tiefpaß-Charakteristik aufweist.

15. Abtrennvorrichtung nach Anspruch 13, **dadurch**

**gekennzeichnet,** daß die Filterschaltung (10) Bandpaß-Charakteristik aufweist.

Fig. 1a

Fig. 1b

*Fig. 2*

max. Aufnahmevermögen

Fig.3

Fig. 4a

*Fig. 4b*

L

PE

2

50

1

2

4

8

71

70

3

60

61

10

*Fig. 4c*

## Fig. 5

*Fig.6a*

*Fig.6b*

Fig.6c

EP 0 862 255 A1

| | Europäisches Patentamt | **EUROPÄISCHER RECHERCHENBERICHT** | Nummer der Anmeldung EP 98 89 0032 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | US 4 577 148 A (SWEETANA ANDREW S)<br>* Spalte 2, Zeile 36 - Zeile 42 *<br>* Spalte 4, Zeile 67 - Spalte 5, Zeile 15; Abbildung 1 *<br>--- | 1,2 | H02H9/04<br>H02H3/04 |
| D,A | EP 0 613 226 A (SIEMENS AG)<br><br>* Zusammenfassung; Abbildung 1 *<br>--- | 1,2,4,7,<br>8,10 | |
| A | EP 0 702 445 A (SIEMENS AG)<br>* Zusammenfassung; Abbildung 1 *<br>----- | 12 | |
| | | | RECHERCHIERTE SACHGEBIETE (Int.Cl.6)<br><br>H02H<br>H01T |

Der vorliegende Recherchenbericht wurde für alle Patentansprüche erstellt.

| Recherchenort | Abschlußdatum der Recherche | Prüfer |
|---|---|---|
| BERLIN | 28.April 1998 | Hijazi, A |

EPO FORM 1503 03 82 (P04C09)